(19) Europäisches Patentamt
European Patent Office
Office européen des brevets

(11) **EP 3 910 017 B1**

(12) **EUROPEAN PATENT SPECIFICATION**

(45) Date of publication and mention
of the grant of the patent:
**26.03.2025  Bulletin 2025/13**

(21) Application number: **20174741.7**

(22) Date of filing: **14.05.2020**

(51) International Patent Classification (IPC):
*C08L 1/18* *(2006.01)*    *C09D 11/52* *(2014.01)*
*H01B 1/24* *(2006.01)*    *C08K 3/04* *(2006.01)*
*B41F 15/00* *(2006.01)*

(52) Cooperative Patent Classification (CPC):
(C-Sets available)
**C09D 11/037; C08K 3/04; C08L 1/18; C09D 11/033;
C09D 11/102; C09D 11/106; C09D 11/14;
C09D 11/52; H01B 1/24**          (Cont.)

(54) **HIGH SPEED PRINTABLE CARBON INK**

HOCHGESCHWINDIGKEITSDRUCKFÄHIGE KOHLENSTOFFTINTE

ENCRE DE CARBONE IMPRIMABLE À GRANDE VITESSE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.11.2021  Bulletin 2021/46**

(73) Proprietor: **Henkel AG & Co. KGaA
40589 Düsseldorf (DE)**

(72) Inventors:
• **Oldenzijl, Rudolf
9601 Hoogezand (NL)**
• **van der Meulen, Inge
5521 WM Eersel (NL)**

(56) References cited:
**WO-A1-2004/039898     US-A1- 2003 151 028**

• **"Electroconductive ink for printed circuit boards
- contains mixt. of carbon black and graphite
interlayer cpd", DERWENT, 3 March 1989
(1989-03-03) - 3 March 1989 (1989-03-03),
XP002276301**

(52) Cooperative Patent Classification (CPC): (Cont.)

C-Sets
**C08K 3/04, C08L 1/18;**
**C08L 1/18, C08K 3/04, C08K 3/04**

## Description

Technical field of the invention

The present invention relates to an electrically conductive composition which can be used in high speed printing techniques such as flexography and rotogravure printing.

Technical background of the invention

Ordinary electrically conductive inks have been applied to the substrates by for example screen printing, rotary screen printing and dispensing. These printing methods are considered relative slow printing methods.

For example, screen printing is a traditional printing method, which has been used a lot in the printed electronics industry. Screen printing results in a solids layer having a thickness in the range of from 5 to 15 microns, and these layers are sufficiently conductive to carry the current for a lot of applications. Screen printing has a printing speed from about 3 to 20 m/min.

These mature high-speed printing technologies are also used in the graphic industry for example in making packaging. Typically, thin layers of coloured inks are being applied to get an image onto a substrate. In this method colours are applied as separate dots, however, to the naked eye, these separate dots provide a very nice coloured image. For the electrically conductive applications, the dried ink must be connected in order to provide steady the current flow, and therefore, electrically conductive inks cannot be applied as separate dots.

There is a high demand on new smart consumer goods such as smart nappies, RFID antennas and medical electrodes. In order to be able to do a mass production of these new smart consumer goods, higher speed printing techniques like flexography and rotogravure are needed. By a term "high speed printing" is meant herein a speed of up to and over 200 m/min. A certain electrical conductivity is required for the inks used in these new smart consumer goods, some of them require a high conductivity and for some a lower conductivity is enough. For high demanding applications, the inks must be highly conductive, and therefore, silver is used as electrically conductive material, whereas for less demanding applications lower resistance levels are enough, and therefore, carbon or graphite can be used as electrically conductive material. However, not all electrically conductive inks are suitable for a high-speed printing process. In fact, most of the currently available electrically conductive inks are not suitable for a high-speed printing process.

One of the recent trends in the printed electronics industry has been to investigate cost effective higher speed printing methods. It has been found out that currently available electrically conductive inks comprising carbon are not suitable for a high-speed printing. The current carbon inks fail mainly because they are not conductive enough when printed in thin layers and often the dried coating retains too much solvent after it has been applied. Another failure is that the current carbon inks lose their functionality when printed in high speeds.

Therefore, there is a need for an electrically conductive ink, which can be applied by high speed printing methods while maintaining good technical properties and is cost effective. Document WO2004039898 A1 discloses an electrically conductive ink comprising a resin, electrically conductive particles and a solvent.

Short description of the figures

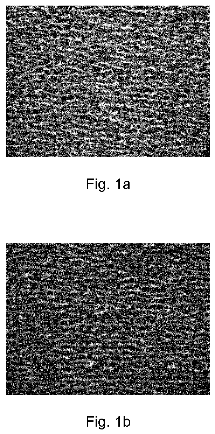

Figure 1a and 1b illustrate a flexography printing trial on an industrial printer.

Summary of the invention

The present invention relates to an electrically conductive composition as defined in claim 1.

The present invention encompasses an electrically conductive film comprising an electrically conductive composition according to the present invention.

The present invention relates to use of an electrically conductive composition according to the present invention in a flexography or a rotogravure printing.

The present invention encompasses use of an electrically conductive composition or an electrically conductive film according to the present invention in smart personal hygiene products, heating elements, pressure sensors, smart books, smart labelling and shielding applications.

Detailed description of the invention

In the following passages the present invention is described in more detail. Each aspect so described may be combined with any other aspect or aspects unless clearly indicated to the contrary. In particular, any feature indicated as being preferred or advantageous may be combined with any other feature or features indicated as being preferred or advantageous.

In the context of the present invention, the terms used are to be construed in accordance with the following definitions, unless a context dictates otherwise.

As used herein, the singular forms "a", "an" and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps.

The recitation of numerical end points includes all numbers and fractions subsumed within the respective ranges, as well as the recited end points.

All percentages, parts, proportions and then like mentioned herein are based on weight unless otherwise indicated.

When an amount, a concentration or other values or parameters is/are expressed in form of a range, a preferable range, or a preferable upper limit value and a preferable lower limit value, it should be understood as that any ranges obtained by combining any upper limit or preferable value with any lower limit or preferable value are specifically disclosed, without considering whether the obtained ranges are clearly mentioned in the context.

Unless otherwise defined, all terms used in disclosing the invention, including technical and scientific terms, have the meaning as commonly understood by one of the ordinary skills in the art to which this invention belongs to. By means of further guidance, term definitions are included to better appreciate the teaching of the present invention.

The Applicant has investigated electrically conductive inks applied by high speed printing methods. Especially, a sheet resistance of layers (various thickness) of electrically conductive inks, which were applied by a gravure printer was investigated, and it was found that a low sheet resistance in Ohm/sq/$25\mu$m, does not always provide the lowest resistance in thin layers. In this context, a thin layer is considered to have thickness in the range of from 1 to 2 $\mu$m. In further experiments it was found that a low sheet resistance can be optimized by selecting an ideal combination of a resin and electrically conductive particles. Further advantage of the ideal combination of a resin and electrically conductive particles is that an ink with a suitable viscosity, a good value for money and a good conductivity in thin layers can be provided.

The present invention relates to an electrically conductive composition comprising a) a resin selected from the group consisting of nitrocellulose, chlorinated polyester, chlorinated polyether, chlorinated polyvinyl, chlorinated polyacetate and mixtures thereof; b) electrically conductive particles comprising graphite and carbon black, wherein ratio of said graphite and said carbon black is from 1:1 to 5:1; and c) a solvent, wherein ratio of said electrically conductive particles and said resin is from 0.20:1 to 4:1.

The electrically conductive composition according to the present has a combination of electrically conductive particles, which is optimized to provide good conductivity in thin layers. In addition, the solvent and rheology make it possible to print the composition and dry it (after dilution) at high speeds.

The electrically conductive composition according to the present invention comprises a resin.

Suitable resins are nitrocellulose, chlorinated polyester, chlorinated polyether, chlorinated polyvinyl, chlorinated polyacetate and mixtures thereof.

The selected resins release the solvent easily, which makes the composition suitable for consumer usage. Further, these resins are preferred because they provide low resistance and high conductivity. Generally, these resins disperse well the electrically conductive particles.

In the present invention nitrocellulose is used as a resin. Nitrocellulose is particularly preferred because it provides superior conductivity, while it dissolves well and releases the used solvent quickly.

Suitable commercially available resins for use in the present invention include but are not limited to Solbin A from ShinEtsu and NC-E560 IPA 30% from Dow.

A resin may be present in an electrically conductive composition according to the present invention in an amount from 2 to 25% by weight of the total weight of the composition, preferably from 3 to 23%, and more preferably from 4 to 21%.

When the quantity of the resin exceeds 25% the viscosity of the composition may increase to the level that the composition is no longer high speed printable, whereas too low quantity, less than 2% may lead to a poor coating, low viscosity and settling of the resin and electrically conductive particles. The electrically conductive composition according to the present invention comprises electrically conductive particles comprising graphite and carbon black, wherein ratio of said graphite and said carbon black is from 1:1 to 5:1.

The Applicant has found out that good results can be achieved by using a combination of graphite and carbon black as electrically conductive particles.

Suitable graphite for use in the present invention has preferably a particle size D90 from 1 $\mu$m to 75 $\mu$m, more preferably from 2 $\mu$m to 45 $\mu$m, more preferably from 3 $\mu$m to 25 $\mu$m and even more preferably 3 $\mu$m to 10 $\mu$m. Wherein the particle size is measured by laser diffraction. In this method a laser beam lights up a cell which contains the sample of graphite suspended in water, the generated diffraction pattern is collected by the system and analysed using the light scattering developed by Mie. The particle size distribution is calculated and reported for quantity of 90%.

In addition to particle size D90, or as an alternative feature of suitable graphite for use in the present invention is a specific surface area preferably from 0.25 $m^2/g$ to 25 $m^2/g$, more preferably from 4 $m^2/g$ to 22 $m^2/g$ and more preferably from 7 $m^2/g$ to 21 $m^2/g$, wherein said specific surface area is measured by B.E.T nitrogen absorption. The measurement is carried out by measuring the adsorption-desorption isotherm of nitrogen on the surface of the material by means of the Brunauer-Emmet-Teller algorithm, a definite amount (accuracy 0.01mg) of powder is weighted in a sample tube. Subsequently the sample undergoes a series of heating and cooling runs from the evolution of the pressure in the sample tube and the amount of adsorbed nitrogen during different step is calculated; from this data the specific surface area is calculated and reported in $m^2/g$.

In a preferred embodiment the graphite has a particle size D90 from 1 $\mu$m to 75 $\mu$m, preferably from 2 $\mu$m to 45 $\mu$m, more preferably from 3 $\mu$m to 25 $\mu$m and even more preferably 3 $\mu$m to 10 $\mu$m and/or a specific surface area from 0.25 $m^2/g$ to 25 $m^2/g$, preferably from 4 $m^2/g$ to 22 $m^2/g$ and more preferably from 7 $m^2/g$ to 21 $m^2/g$, wherein said particle size is measured by laser diffraction, and wherein said specific surface area is measured by B.E.T nitrogen absorption.

Preferred specific surface areas and particle sizes of a graphite as separate features or as a combination provide low resistance and good conductivity in thin layers as well as good printability.

Generally, too large particle size of a graphite may lead to a lower specific surface area, and in addition, difficulties to release the particles from the cells during the printing process. Whereas too small particle size of a graphite may be too expensive to produce, and have larger specific surface area, which may lead to a higher viscosity. High viscosity is not ideal for a high-speed printing and creates a need for a heavy dilution prior to application, which may adversely affect conductivity of the printed layer.

Lower graphite specific surface area than 0.25 $m^2/g$ may lead to decrease of conductivity, whereas higher specific surface area than 25 $m^2/g$ may lead problems with viscosity of the composition and additionally, would not be cost effective component.

Suitable commercially available graphite for use in the present invention include but is not limited to Timrex SFG6 from TIMCAL Graphite & Carbon.

Suitable carbon black for use in the present invention has preferably an oil absorption number from 70 ml/100g to 500 ml/100g, more preferably from 100 ml/100g to 300 ml/100g and more preferably from 150 ml/100g to 200 ml/100g, wherein said oil absorption number is measured according to ASTM D2414.

In addition to oil absorption number, or as an alternative feature suitable carbon black for use in the present invention has a specific surface area preferably from 30 $m^2/g$ to 1400 $m^2/g$, more preferably from 100 $m^2/g$ to 700 $m^2/g$ and more preferably from 150 $m^2/g$ to 350 $m^2/g$, wherein said specific surface area is measured according by BET. The method is based on the registration of the absorption of nitrogen at 77K. Following the model proposed by Brunauer, Emmet and Teller (BET), the monolayer capacity can be determined. On the basis of the cross-sectional area of the nitrogen molecule, the monolayer capacity and the weight of the sample, the specific surface can then be calculated.

In a preferred embodiment the carbon black has an oil absorption number from 70 ml/100g to 500 ml/100g, preferably from 100 ml/100g to 300 ml/100g and more preferably from 150 ml/100g to 200 ml/100g, and/or a specific surface area from 30 $m^2/g$ to 1400 $m^2/g$, preferably from 100 $m^2/g$ to 700 $m^2/g$ and more preferably from 150 $m^2/g$ to 350 $m^2/g$, wherein said oil absorption number is measured according to ASTM D2414, and wherein said specific surface area is measured according by BET. Preferred specific surface areas and oil absorption numbers separate or as a combination provide a good printability properties and low resistance in thin layers.

When the oil absorption number of the carbon black is too low, it means less branched carbon black, and therefore, there may be fewer contact points in thin layers, and this will adversely affect conductivity, whereas too high oil absorption number of the carbon black, mainly greater than 500, may cause difficulties in printing process.

When the specific surface area size of the carbon black is too small, mainly less than 30, this may lead to a poor conductivity, whereas too high specific surface area of the carbon black, mainly more than 1400, may lead difficulties in printing process.

Suitable commercially available carbon black for use in the present invention include but is not limited to Vulcan XC72 from Cabot and Ensaco 250G from Imerys.

According to the present invention ratio of said graphite and said carbon black is from 1:1 to 5:1, preferably from 2:1 to 4:1, and more preferably ratio of said graphite and said carbon black is 3:1. The Applicant has found out that these graphite to carbon black ratios provide ideal viscosity and conductivity properties to the composition according to the present invention. It has been found that too high carbon black concentration in relation to graphite may lead thicker printed layers.

An electrically conductive particles may be present in an electrically conductive composition according to the present invention in an amount from 3 to 45% by weight of the total weight of the composition, preferably from 4 to 43%, and more preferably from 4.75 to 41%.

When the quantity of the electrically conductive particles is too low, mainly less than 3%, the quantity may not provide desired conductivity, whereas too high quantity, mainly more than 45%, may lead difficulties to process the composition in a printing process.

The Applicant has found out that particularly good properties are obtained, and the composition can be used in a high speed printing when the ratio of said electrically conductive particles and said resin is from 0.20:1 to 4:1, preferably from 0.25:1 to 3:1.

The Applicant has found that this ratio of electrically conductive particles and resin provides good viscosity and good conductivity properties.

The electrically conductive composition according to the present invention comprises a solvent. The composition may comprise one solvent or mixture or two or more solvents.

The solvent of the present invention is selected from isopropyl alcohol, n-propyl acetate and mixtures thereof.

These solvents are preferred because they dissolve the resin well and are easily released during the drying process.

Suitable commercially available solvent for use in the present invention include but is not limited to ethyl acetate from Eastman and butyl acetate from Eastman.

A solvent may be present in an electrically conductive composition according to the present invention in an amount from 40 to 92% by weight of the total weight of the composition, preferably from 45 to 91%, and more preferably from 46 to 90%.

If the solvent quantity is lower than 40%, the viscosity of the composition may increase too high, and therefore, adversely affect the printing properties of the composition, whereas higher quantity, more than 90% may adversely affect the conductivity of the composition.

The electrically conductive composition according to the present invention is preferably prepared by a pebble mill process. In the pebble mill process the electrically conductive particles, a resin and a solvent are being grinded by pebbles for about 15 hours in a large mill.

In one aspect of the invention, an electrically conductive film can be formed comprising the electrically conductive composition according to the present invention.

An electrically conductive film according to the present invention has one or more layers, wherein each layer has a thickness from 0.5 $\mu$m to 3 $\mu$m, preferably from 0.75 $\mu$m to 2 $\mu$m, and more preferably from 1 to 1.5 $\mu$m.

Thin layers are desired due the cost-effective aspect but are also desired in a process point view. Thinner layers mean less material build up in the rolls used in the printing process, and this way the quality of printing is increased.

The electrically conductive composition according to the present invention can be used in a high-speed printing such as a flexography or a rotogravure printing.

During flexographic printing, an ink is transferred from a metal cylinder (containing tiny cells, which are filled with ink) to a polymer sleeve (holding the image, like stamp) and subsequently the sleeve transfers the ink (the stamp) to the substrate. This process is fast, and the used ink must have low viscosity to allow this process. Application of inks with flexography or rotogravure results in thin dry layers having thickness in the range of about 1 micron.

The electrically conductive composition according to the present invention can be printed in a speed up to and over 200m/min.

An electrically conductive composition according to the present invention has preferably viscosity from 600 to 5000 mPas, preferably from 650 to 3000, and more preferably from 700 to 2000 mPas, wherein said viscosity is measured Brookfield (DV-I prime), spindle #2 at 20, at room temperature.

The Applicant has found that this viscosity range is ideal for the production process used to produce the electrically conductive composition according to the present invention and in addition, this viscosity range prevents composition settling during the storage.

For a flexography or rotogravure printing the viscosity of the composition needs to be relatively low in order to get good release from the cells. Therefore, in one preferred embodiment, the composition according to the present invention is diluted prior to the application. Therefore, the present invention is also directed to a diluted electrically conductive composition, wherein said electrically conductive composition according to the present invention is diluted in range from 20 to 70wt%, preferably from 40 to 50wt%.

Preferred dilution range is around 40-50 wt.% and this leads to a viscosity in the range of 100 mPa.s. Despite of low viscosity, the diluted composition according to the present invention provides good conductivity in a thin layer.

Suitable solvent for use in the dilution is the solvent used in the composition according to the present invention. In a highly preferred embodiment, the solvent used in a dilution is n-propyl acetate.

The composition according to the present invention does not lose its functionality while printed in high speed.

The present invention encompasses use of an electrically conductive composition or an electrically conductive film according to the present invention in smart personal hygiene products, heating elements, pressure sensors, smart books, smart labelling and shielding applications.

Smart personal hygiene products are such as smart nappies.

Examples

Table 1

|  | Comparative example | Example 1 | Example 2 |
|---|---|---|---|
| Resin | Solbin A from Shin Etsu | NC E 560 from Dow Chemical | NC E 560 from Dow Chemical |
| Electrically conductive particles | Graphite pure 200-09 from Asbury | Graphite pure 200-09 from Asbury | Timrex SFG6 from Imerys |
| Electrically conductive particles | Vulcan XC 72 from Cabot | Vulcan XC 72 from Cabot | Vulcan XC 72 from Cabot |
| Solvent 1 | methyl isobutyl ketone from Eastman | n-propyl acetate from Eastman | n-propyl acetate from Eastman |
| Solvent 2 | isopropyl alcohol from Dow Chemical | isopropyl alcohol from Dow Chemical | isopropyl alcohol from Dow Chemical |
| % Resins | 13.3 | 9.73 | 9.73 |
| wt% electrically conductive particles - graphite | 20 | 15 | 15 |
| wt% electrically conductive particles - carbon black | 6.7 | 5 | 5 |
| wt% solvent 1 | 60 | 66.1 | 66.1 |
| wt% solvent 2 |  | 4.17 | 4.17 |
| Total | 100 | 100 | 100 |
| Total wt % pigment | 26.7 | 20 | 20 |
| Pigment to binder ratio | 2 | 2 | 2 |

Viscosity of the compositions is about 200mPa.s.

The samples were applied a with a bar coater onto substrate and dried in the air. Before the application, the samples were diluted until the solid content was 23%. The results are combined in the table 2. Example 1 provided the lowest resistance in a thick dense layer.

Table 2

| Ink | Comparative example | Example 1 | Example 2 |
|---|---|---|---|
| Dry film thickness ($\mu$m) | 16 | 14 | 13 |
| Track resistance 1 (Ohm) | 274 | 108 | 208 |
| Track resistance 2 (Ohm) | 293 | 95 | 189 |
| Average R (Ohm) | 283.5 | 101.5 | 198.5 |
|  |  |  |  |
| Ohm/sq/25$\mu$m | 18.1 | 5.7 | 10.3 |

Examples from the tables 1 and 2 were applied by 90 $\mu$m applicator.

The coating was subsequently dried in air and the thickness of the layer was measured by using Mitutoyo digital thickness gage.

The film was let to settle for 15 minutes, and a track of 10 x 1 cm was isolated, and the resistance of this track was measured. The resistance measurement was done with a 4-point probe using a digital Keithley electrometer.

After the resistance was measured, the sheet resistance was calculated according to the equation below.

$$R = \frac{R(tr) \times H(tr)}{N(tr) \times 25}$$

R = Sheet resistance in Ohm/square/25μm
R(tr) = Resistance of a track in Ohm
H(tr) = Coating thickness in μm
N(tr) = Number of squares
25 = Standard coating thickness

The results are listed in table 3. Example 2 provided the lowest resistance. The lower the thickness, the better the formula of example 2 is compared to the other inks.

Table 3

| Ink | thickness (μm) | Comparative example | Example 1 | Example 2 |
|---|---|---|---|---|
| Air dried | | kOhm/sq | kOhm/sq | kOhm/sq |
| Highest volume | ~ 2.4 | 2.2 | 1.1 | 0.7 |
| Medium volume | ~ 2.0 | 6.4 | 2.9 | 1.2 |
| Lowest volume | ~ 1.8 | 9.7 | 7.1 | 2.4 |

Figure 1a and 1b illustrate a flexography printing trial on an industrial printer. Both example 1 and example 2 were printed under the same circumstances on PET by using gravure proofer. After printing, the resistance over a track of 50 x 2 mm (=25 squares) is being measured and the kOhm/sq is calculated.
Example 2 provides the lowest resistance (Example 1 6.3 kOhm/sq and Example 2 2.0 kOhm/sq).

Table 4

| | Example 3 | Example 4 | Example 5 | Example 6 | Example 7 |
|---|---|---|---|---|---|
| Nitrocellulose EC 560 from Dow Chemical (%) | 13.3 | 13.3 | 5 | 5 | 20 |
| Timrex SFG6 from Imerys (%) | 4.99 | 29.93 | 11.25 | 3.75 | 7.5 |
| Vulcan XC 72 from Cabot (%) | 1.66 | 9.98 | 3.75 | 1.25 | 2.5 |
| n-Propyl acetate from Eastman (%) | 74.35 | 41.09 | 77.86 | 87.86 | 61.4 |
| Isopropyl alcohol from Dow Chemical | 5.7 | 5.7 | 2.14 | 2.14 | 8.6 |
| Total (%) | 100 | 100 | 100 | 100 | 100 |
| Total pigment (wt%) | 6.65 | 39.91 | 15 | 5 | 10 |
| solids (wt%) | 19.95 | 53.21 | 20 | 10 | 30 |
| Pigment to binder | 0.5 | 3.0 | 3.0 | 1.0 | 0.5 |

**Claims**

1.  An electrically conductive composition comprising

    a) a nitrocellulose resin;
    b) electrically conductive particles comprising graphite and carbon black, wherein ratio of said graphite and said carbon black is from 1:1 to 5:1; and
    c) a solvent selected from isopropyl alcohol, n-propyl acetate and mixtures thereof,

    where in ratio of said electrically conductive particles and said resin is from 0.20:1 to 4:1.

2.  An electrically conductive composition according to claim 1, wherein said resin is present from 2 to 25% by weight of the total weight of the composition, preferably from 3 to 23%, and more preferably from 4 to 21%.

3. An electrically conductive composition according to claim 1 or 2, wherein said graphite has particle size D90 from 1 $\mu$m to 75 $\mu$m, preferably from 2 $\mu$m to 45 $\mu$m, more preferably from 3 $\mu$m to 25 $\mu$m and even more preferably 3 $\mu$m to 10 $\mu$m,
and/or

specific surface area from 0.25 $m^2$/g to 25 $m^2$/g, preferably from 4 $m^2$/g to 22 $m^2$/g and more preferably from 7 $m^2$/g to 21 $m^2$/g,
wherein said particle size is measured by laser diffraction, and wherein said specific surface area is measured by B.E.T nitrogen absorption.

4. An electrically conductive composition according to any of claims 1 to 3, wherein said carbon black has an oil absorption number from 70 ml/100g to 500 ml/100g, preferably from 100 ml/100g to 300 ml/100g and more preferably from 150 ml/100g to 200 ml/100g,
and/or

specific surface area from 30 $m^2$/g to 1400 $m^2$/g, preferably from 100 $m^2$/g to 700 $m^2$/g and more preferably from 150 $m^2$/g to 350 $m^2$/g,
wherein said oil absorption number is measured according to ASTM D2414, and wherein said specific surface area is measured according by BET.

5. An electrically conductive composition according to any of claims 1 to 4, wherein said ratio of said graphite and said carbon black is from 2:1 to 4:1, preferably said ratio is 3:1.

6. An electrically conductive composition according to any of claims 1 to 5, wherein said electrically conductive particles are present from 3 to 45% by weight of the total weight of the composition, preferably from 4 to 43%, and more preferably from 4.75 to 41%.

7. An electrically conductive composition according to any of claims 1 to 6, wherein said ratio of said electrically conductive particles and said resin is from 0.25:1 to 3:1

8. An electrically conductive composition according to any of claims 1 to 7, wherein said solvent is present from 40 to 92% by weight of the total weight of the composition, preferably from 45 to 91%, and more preferably from 46 to 90%.

9. An electrically conductive composition according to any of claims 1 to 8, wherein said composition has viscosity from 600 to 5000 mPas, preferably from 650 to 3000, and more preferably from 700 to 2000 mPas, wherein said viscosity is measured Brookfield (DV-I prime), spindle #2 at 20, at room temperature.

10. A diluted electrically conductive composition, wherein said electrically conductive composition according to any of claims 1 to 9 is diluted in range from 20 to 70wt%, preferably from 40 to 50wt%.

11. An electrically conductive film, comprising an electrically conductive composition according to any of claims 1 to 9.

12. An electrically conductive film according to claim 11, wherein said film has one or more layers, and wherein said layer has a thickness from 0.5 $\mu$m to 3 $\mu$m, preferably from 0.75 $\mu$m to 2 $\mu$m, and more preferably from 1 to 1.5 $\mu$m.

13. Use of an electrically conductive composition according to any of the claims 1 to 9 or a diluted composition according to claim 10 in a flexography or a rotogravure printing.

14. Use of an electrically conductive composition according to any of the claims 1 to 9 or an electrically conductive film according to 10 or 11 in smart personal hygiene products, heating elements, pressure sensors, smart books, smart labelling and shielding applications.

**Patentansprüche**

1. Elektrisch leitfähige Zusammensetzung, umfassend:

a) ein Nitrocelluloseharz;

b) elektrisch leitfähige Partikel, umfassend Graphit und Ruß, wobei das Verhältnis des Graphits und des Rußes 1:1 bis 5:1 beträgt; und

c) ein Lösungsmittel, ausgewählt aus Isopropylalkohol, N-Propylacetat und Mischungen davon, wobei das Verhältnis der elektrisch leitfähigen Partikel und des Harzes von 0,20:1 bis 4:1 beträgt.

2. Elektrisch leitfähige Zusammensetzung nach Anspruch 1, wobei das Harz von zu 2 bis 25 Gew.-% des Gesamtgewichts der Zusammensetzung, vorzugsweise von zu 3 bis 23 Gew.-% und bevorzugter von zu 4 bis 21 Gew.-%, vorhanden ist.

3. Elektrisch leitfähige Zusammensetzung nach Anspruch 1 oder 2, wobei der Graphit eine Partikelgröße D90 von 1 $\mu$m bis 75 $\mu$m, vorzugsweise von 2 $\mu$m bis 45 $\mu$m, bevorzugter von 3 $\mu$m bis 25 $\mu$m und noch bevorzugter von 3 $\mu$m bis 10 $\mu$m,
und/oder

eine spezifische Oberflächenregion von 0,25 m$^2$/g bis 25 m$^2$/g, vorzugsweise von 4 m$^2$/g bis 22 m$^2$/g und bevorzugter von 7 m$^2$/g bis 21 m$^2$/g, aufweist,
wobei die Partikelgröße durch Laserbeugung gemessen wird, und wobei die spezifische Oberflächenregion durch B.E.T-Stickstoffabsorption gemessen wird.

4. Elektrisch leitfähige Zusammensetzung nach einem der Ansprüche 1 bis 3, wobei der Ruß eine Ölabsorptionszahl von 70 ml/100 g bis 500 ml/100 g, vorzugsweise von 100 ml/100 g bis 300 ml/100 g und bevorzugter von 150 ml/100 g bis 200 ml/100 g
und/oder

eine spezifische Oberflächenregion von 30 m$^2$/g bis 1400 m$^2$/g, vorzugsweise von 100 m$^2$/g bis 700 m$^2$/g und bevorzugter von 150 m$^2$/g bis 350 m$^2$/g aufweist,
wobei die Ölabsorptionszahl gemäß ASTM D2414 gemessen wird, und wobei die spezifische Oberflächenregion gemäß BET gemessen wird.

5. Elektrisch leitfähige Zusammensetzung nach einem der Ansprüche 1 bis 4, wobei das Verhältnis des Graphits und des Rußes 2:1 bis 4:1 beträgt, vorzugsweise das Verhältnis 3:1 beträgt.

6. Elektrisch leitfähige Zusammensetzung nach einem der Ansprüche 1 bis 5, wobei die elektrisch leitfähigen Partikel von 3 bis 45 Gew.-% des Gesamtgewichts der Zusammensetzung, vorzugsweise von 4 bis 43 Gew.-% und bevorzugter von 4,75 bis 41 Gew.-% vorhanden sind.

7. Elektrisch leitfähige Zusammensetzung nach einem der Ansprüche 1 bis 6, wobei das Verhältnis der elektrisch leitfähigen Partikel und des Harzes von 0,25:1 bis 3:1 beträgt.

8. Elektrisch leitfähige Zusammensetzung nach einem der Ansprüche 1 bis 7, wobei das Lösungsmittel von 40 bis 92 Gew.-% des Gesamtgewichts der Zusammensetzung, vorzugsweise von 45 bis 91 Gew.-% und bevorzugter von 46 bis 90 Gew.-% vorhanden ist.

9. Elektrisch leitfähige Zusammensetzung nach einem der Ansprüche 1 bis 8, wobei die Zusammensetzung eine Viskosität von 600 bis 5000 mPas, vorzugsweise von 650 bis 3000 und bevorzugter von 700 bis 2000 mPas aufweist, wobei die Viskosität bei Raumtemperatur nach Brookfield (DV-I prime), Spindel Nr. 2 bei 20, gemessen wird.

10. Verdünnte elektrisch leitfähige Zusammensetzung, wobei die elektrisch leitfähige Zusammensetzung nach einem der Ansprüche 1 bis 9 in dem Bereich von 20 bis 70 Gew.-%, vorzugsweise von 40 bis 50 Gew.-% verdünnt ist.

11. Elektrisch leitfähige Folie, umfassend eine elektrisch leitfähige Zusammensetzung nach einem der Ansprüche 1 bis 9.

12. Elektrisch leitfähige Folie nach Anspruch 11, wobei die Folie eine oder mehrere Schichten aufweist, und wobei die Schicht eine Dicke von 0,5 $\mu$m bis 3 $\mu$m, vorzugsweise von 0,75 $\mu$m bis 2 $\mu$m und bevorzugter von 1 bis 1,5 $\mu$m aufweist.

13. Verwendung einer elektrisch leitfähigen Zusammensetzung nach einem der Ansprüche 1 bis 9 oder einer verdünnten Zusammensetzung nach Anspruch 10 in einem Flexodruck- oder Tiefdruckverfahren.

**14.** Verwendung einer elektrisch leitfähigen Zusammensetzung nach einem der Ansprüche 1 bis 9 oder einer elektrisch leitfähigen Folie nach 10 oder 11 in intelligenten Körperhygieneprodukten, Heizelementen, Drucksensoren, intelligenten Büchern, intelligenten Etikettierungs- und Abschirmanwendungen.

**Revendications**

**1.** Composition électriquement conductrice comprenant

a) une résine de nitrocellulose ;
b) des particules électriquement conductrices comprenant du graphite et du noir de carbone, dans laquelle le rapport entre ledit graphite et ledit noir de carbone va de 1:1 à 5:1 ; et
c) un solvant choisi parmi alcool isopropylique, acétate de n-propyle et mélanges de ceux-ci, dans laquelle le rapport entre lesdites particules électriquement conductrices et ladite résine va de 0,20:1 à 4:1.

**2.** Composition électriquement conductrice selon la revendication 1, dans laquelle ladite résine est présente à raison de 2 à 25 % en poids du poids total de la composition, de préférence de 3 à 23 %, et plus préférablement de 4 à 21 %.

**3.** Composition électriquement conductrice selon la revendication 1 ou 2, dans laquelle ledit graphite a une taille de particule D90 allant de 1 $\mu$m à 75 $\mu$m, de préférence de 2 $\mu$m à 45 $\mu$m, plus préférablement de 3 $\mu$m à 25 $\mu$m et encore plus préférablement de 3 $\mu$m à 10 $\mu$m,
et/ou

une surface spécifique allant de 0,25 m$^2$/g à 25 m$^2$/g, de préférence de 4 m$^2$/g à 22 m$^2$/g et plus préférablement de 7 m$^2$/g à 21 m$^2$/g,
dans laquelle ladite taille de particules est mesurée par diffraction laser, et dans laquelle ladite surface spécifique est mesurée par absorption d'azote B.E.T.

**4.** Composition électriquement conductrice selon l'une quelconque des revendications 1 à 3, dans laquelle ledit noir de carbone a un indice d'absorption d'huile allant de 70 ml/100 g à 500 ml/100 g, de préférence de 100 ml/100 g à 300 ml/100 g et plus préférablement de 150 ml/100 g à 200 ml/100 g,
et/ou

une surface spécifique allant de 30 m$^2$/g à 1400 m$^2$/g, de préférence de 100 m$^2$/g à 700 m$^2$/g et plus préférablement de 150 m$^2$/g à 350 m$^2$/g,
dans laquelle ledit indice d'absorption de l'huile est mesuré selon la norme ASTM D2414, et dans laquelle ladite surface spécifique est mesurée par BET.

**5.** Composition électriquement conductrice selon l'une quelconque des revendications 1 à 4, dans laquelle ledit rapport entre ledit graphite et le ledit de carbone va de 2:1 à 4:1, de préférence ledit rapport est de 3:1.

**6.** Composition électriquement conductrice selon l'une quelconque des revendications 1 à 5, dans laquelle lesdites particules électriquement conductrices sont présentes à raison de 3 à 45 % en poids du poids total de la composition, de préférence de 4 à 43 %, et plus préférablement de 4,75 à 41 %.

**7.** Composition électriquement conductrice selon l'une quelconque des revendications 1 à 6, dans laquelle ledit rapport entre lesdites particules électriquement conductrices et ladite résine va de 0,25:1 à 3:1

**8.** Composition électriquement conductrice selon l'une quelconque des revendications 1 à 7, dans laquelle ledit solvant est présent à raison de 40 à 92 % en poids du poids total de la composition, de préférence de 45 à 91 % et plus préférablement de 46 à 90 %.

**9.** Composition électriquement conductrice selon l'une quelconque des revendications 1 à 8, dans laquelle ladite composition a une viscosité allant de 600 à 5000 mPas, de préférence de 650 à 3000, et plus préférablement de 700 à 2000 mPas, dans laquelle ladite viscosité est mesurée par Brookfield (DV-I prime), mobile n° 2 à 20, à température ambiante.

**10.** Composition électriquement conductrice diluée, dans laquelle ladite composition électriquement conductrice selon l'une quelconque des revendications 1 à 9 est diluée dans une plage allant de 20 à 70 % en poids, de préférence de 40 à 50 % en poids.

11. Film électriquement conducteur, comprenant une composition électriquement conductrice selon l'une quelconque des revendications 1 à 9.

12. Film électriquement conducteur selon la revendication 11, dans lequel ledit film a une ou plusieurs couches, et dans lequel ladite couche a une épaisseur allant de 0,5 $\mu$m à 3 $\mu$m, de préférence de 0,75 $\mu$m à 2 $\mu$m, et plus préférablement de 1 à 1,5 $\mu$m.

13. Utilisation d'une composition électriquement conductrice selon l'une quelconque des revendications 1 à 9 ou d'une composition diluée selon la revendication 10 dans une impression par flexographie ou rotogravure.

14. Utilisation d'une composition électriquement conductrice selon l'une quelconque des revendications 1 à 9 ou d'un film électriquement conducteur selon la revendication 10 ou 11 dans des produits d'hygiène personnelle intelligents, des éléments chauffants, des capteurs de pression, des livres intelligents, des étiquettes intelligentes et des applications de protection.

Fig. 1a

Fig. 1b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004039898 A1